# EUROPEAN PATENT SPECIFICATION

(11) **EP 3 701 667 B1**
(45) Date of publication and mention of the grant of the patent: **15.11.2023**
(21) Application number: 18870239.3
(22) Date of filing: 26.10.2018
(51) Int. Cl.: G06Q 10/0834, G06Q 10/0631, G06Q 50/28, G06Q 50/32, H04L 9/00

(54) **ANONYMITY SYSTEM FOR GOODS DELIVERY**
ANONYMITÄTSSYSTEM FÜR DIE WARENLIEFERUNG
SYSTÈME D'ANONYMAT POUR LIVRAISON DE MARCHANDISES

(30) Priority: 27.10.2017 EP 17198832
(43) Date of publication of application: 02.09.2020
(73) Proprietor: Nokia Technologies Oy, 02610 Espoo (FI)
(72) Inventor: BITAULD, David, Cambridge CB5 8DR (GB); LI, Hongwei, Cambridge CB4 1RY (GB); MARTIN-LOPEZ, Enrique, Cambridge CB4 3DN (GB); PALYUTINA, Karina, Cambridge CB4 2AW (GB); ROENNOW, Troels F., Cambridge CB2 9BG (GB)
(74) Representative: Laine IP Oy
(86) International application number: PCT/FI2018/050778
(87) International publication number: WO 2019/081816

(56) References cited:
- WO-A1-2017/090041
- WO-A1-2017/145003
- US-A1- 2009 076 967
- US-A1- 2016 260 171
- US-A1- 2016 342 987
- US-A1- 2017 154 304
- US-A1- 2017 155 515
- US-A1- 2017 232 300
- GUY ZYSKIND ET AL: "Decentralizing Privacy: Using Blockchain to Protect Personal Data", 2015 IEEE SECURITY AND PRIVACY WORKSHOPS, 1 May 2015 (2015-05-01), pages 180-184, XP055359413, DOI: 10.1109/SPW.2015.27 ISBN: 978-1-4799-9933-0
- ALTAWY, R . et al.: "Lelantos: A Blockchain-Based Anonymous Physical Delivery System", 15th Annual Conference on Privacy, Security and Trust (PST, 28 August 2017 (2017-08-28), pages 15-24, XP033411025, DOI: 10.1109/PST.2017.00013

## Description

### FIELD

The present invention relates to systems for goods delivery, such as delivery of letters or packages by postal delivery, and in particular to systems for goods delivery applying non-trusted couriers.

### BACKGROUND

Utilization of new decentralized systems for postal mail and supply chain has been discussed in the past few years, wherein an aim is to improve transparency of the goods delivery. One application would be the decentralisation of postal services, where a large number of small independent actors could participate to the delivery. In such a decentralised system each stakeholder could collect information about users sending and receiving parcels. This information could be used to profile the users and be sold to some entities with whom the users might not wish to share this information.

WO 2017/090041 discloses selective data privacy for data stored in a distributed shared ledger and smart contract thereof. Symmetric and asymmetric techniques are applied for encrypting data in the ledger in such a way that only a set of predetermined parties can decrypt and read data from the ledger.

US 2017/155515 discloses privacy-preserving transaction validation mechanisms for smart contracts included in a ledger.

GUY ZYSKIND ET AL: "Decentralizing Privacy: Using Blockchain to protect Personal Data", 2015 IEEE SECURITY AND PRIVACY WORKSHOPS, 1 May 2015, pages 180-184, XP055359413, addresses encrypting user data with a shared encryption key and controlling access to the user data via blockchain. Further examples are disclosed in WO 2017/145003 A1 and in ALTAWY, R. et al.: "Lelantos: A Blockchain-Based Anonymous Physical Delivery System", 15th Annual Conference on Privacy, Security and Trust (PST, 28 August 2017 (2017-08-28), pages 15-24 ,DOI: 10.1109/PST.2017.00013.

### SUMMARY

The invention is defined by the features of the independent claims. Some specific embodiments are defined in the dependent claims.

### BRIEF DESCRIPTION OF THE DRAWINGS

FIGURE 1 illustrates a method in accordance with at least some embodiments of the present invention;
FIGURES 2 and 3 illustrate example systems capable of supporting at least some embodiments of the present invention;
FIGURE 4 illustrates a goods delivery process in accordance with at least some embodiments of the present invention;
FIGURE 5 illustrates a system configuration with an active relay in accordance with at least some embodiments;
FIGURE 6 illustrate an example system and delivery process in accordance with at least some embodiments; and
FIGURE 7 illustrates an apparatus in accordance with at least some embodiments of the present invention.

### EMBODIMENTS

There are now provided methods and apparatuses for decentralized goods delivery system facilitating anonymity for senders and receivers. At least one intermediate location or entity, herein referred to as a relay, is defined to divide delivery of goods between a sender and a receiver into at least two sub-sections. A smart contract for the goods delivery is provided to a distributed network, the smart contract being associated with tokens issued for selected couriers for confirming delivery. A smart contract may be generally refer to a computerized transaction protocol that executes terms of an agreement or agreed relationship between parties. A blockchain-based smart contract is visible to all users of the blockchain.

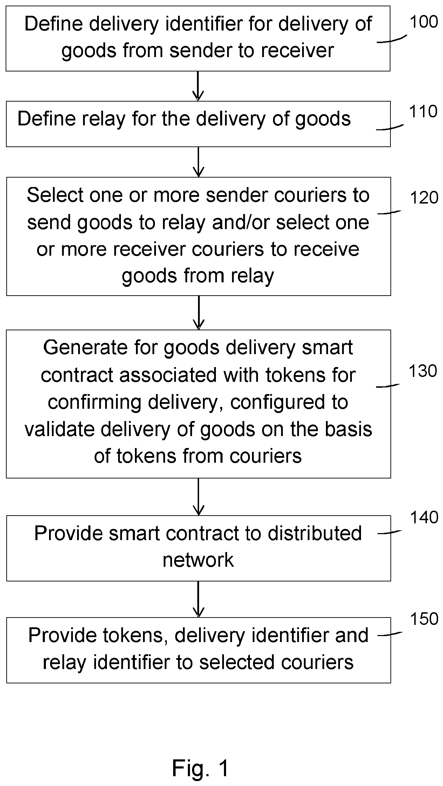

FIGURE 1 illustrates a method according to some embodiments. The method may be implemented in an apparatus of a sender or receiver of goods, such as a user device, a service provider device, or a merchant device. A delivery service or an application may be configured to carry out at least some of the features illustrated in connection with Figure 1.

A delivery identifier is defined 100 for delivery of goods from a sender to a receiver. The goods to be delivered may be a parcel, a packet, mail, for example. Block 100 may be entered upon agreeing a delivery between the sender and the receiver, such as a result of interacting online regarding a purchase of a product or in response to initiating setting up the delivery between the sender and the receiver via a service or an app for this purpose. However, it is to be noted that Figure 1 may be entered without instant preceding interaction between the sender and the receiver, but instead e.g. in response to an indication of a need for a goods delivery service for or by a logistics service provider. The delivery identifier may be created in block 100 or received from another source on the basis of the interaction or information of the goods, for example. The delivery identifier is associated with the delivered goods, e.g. the goods may be labelled with the delivery identifier. In some embodiments, a specific parcel identifier is applied as the delivery identifier.

A relay is defined 110 for the delivery of goods. Thus, an appropriate relay may be selected for the delivery, identified by a relay identifier, such as a relay address. The relay, which may in some embodiments be referred to as relay location or relay entity, may be a position agreed by the sender and receiver, where a sender's courier transmits the parcel to a receiver's courier. The relay could thus be a meeting location. In some other embodiments, the relay may be an entity, such as a storage warehouse or logistics service provider, or a specific resource thereof. In some embodiments, the relay is an active entity, referred to herein as active relay, such as a parcel processing unit.

One or more sender couriers is selected 120 to send the goods to the relay and/or one or more receiver couriers is selected to receive the goods from the relay.

A smart contract for at least a portion of the goods delivery path is generated 130 and provided 140 to the distributed network. The smart contract is associated with tokens for validating or confirming delivery and configured to validate delivery of goods on the basis of tokens received from the (selected) couriers. The tokens, the delivery identifier and the relay identifier are provided 150 to the selected couriers. The provision 140 and/or 150 may refer to sending or causing sending of the associated information by the apparatus carrying out the method of Figure 1, for example.

The smart contract for the goods delivery is configured to validate the delivery of the goods between the sender and the relay by the one or more sender relays and between the relay and receiver by the one or more receiver couriers on the basis of tokens received from the couriers and sender and receiver specific cryptographic information stored in the smart contract in connection with agreeing on the delivery. In some embodiments, this may refers to comparing if the received cryptographic tokens correspond to cryptographic token stored in the smart contract.

Hence, the smart contract for the goods delivery can also be referred to as the smart contract for goods delivery validation. The smart contract for the goods delivery may validate also payment for the couriers after the validation of the goods delivery. The validation may be a further step in the method of Figure 1. A courier sends for the smart contract for the goods delivery a token it received from a subsequent courier or the receiver upon reception of the goods. An anonymous cryptocurrency payment system may be applied, wherein the payment is conditional the courier tasks being completed. Task completion may be proven by collecting tokens at different stages of the delivery.

As in the examples below, the smart contract for the goods delivery may be a multi-signature contract generated by the sender and/or receiver and comprising digital signatures of at least the selected couriers, associated with the respective secret keys required to be received for validating a courier's delivery task.

The present features facilitate that none of the stakeholders (sender, receiver, couriers) are able to link the origin and destination of a parcel. Hence, an anonymous delivery is enabled, where linking the origin and the destination of the parcel would require all the couriers to be corrupted.

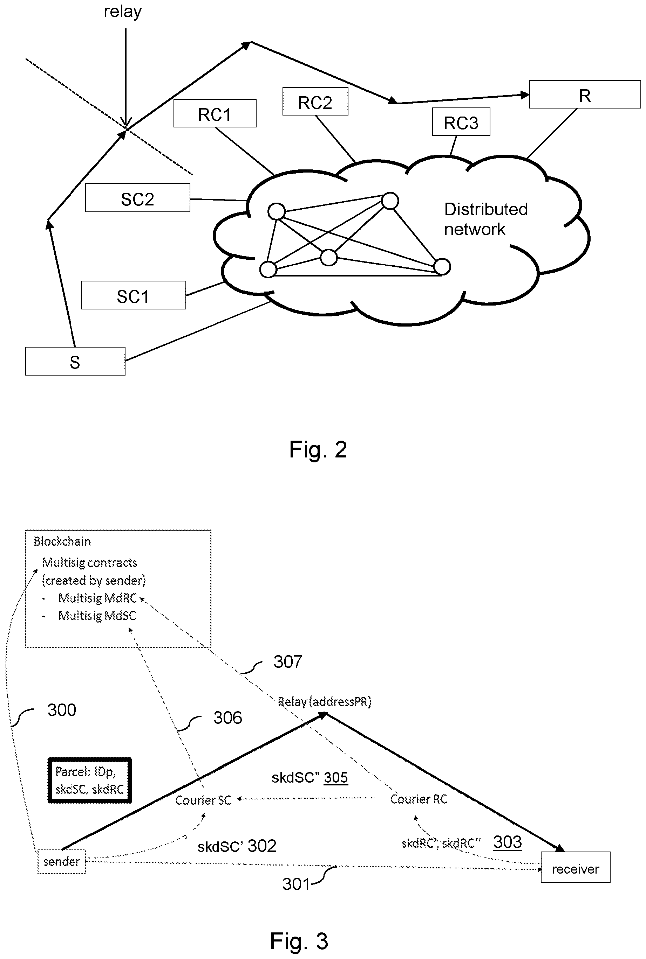

FIGURE 2 illustrates a system in which at least some of the present embodiments may be applied. S, R and SC1 (first sender courier), SC2, RC1 (first receiver courier), RC2 and RC3 represent devices of associated sender, receiver, and couriers, respectively. The arrowed lines illustrate transfer of goods from the sender to the receiver. At least some of the devices may be connected to a distributed network, such as a blockchain-based network. The distributed network may comprise a number of nodes and at least some of the devices may operate as nodes in the distributed network, or one or more of the devices may connect a node of the distributed network so that the latter operates on its behalf. Information associated with agreed delivery of goods, such as the multi-signature contract, may be stored in a distributed ledger stored at least in part of nodes of the distributed network.

The devices S, R and SC1, SC2, RC1, RC2 and RC3 may comprise corporate, authority, and/or user devices, such as a server, a desktop/tablet/laptop computer, smartphone, wearable, auxiliary device, vehicle unit, or other suitable electronic device. The system may comprise an administrator or management node, a hub, relay or other kind of intermediate device (not shown) for connecting a node to further networks or services, such as another distributed or centralized computing system or a cloud service. The nodes are mutually addressable in a suitable way, for example, they may be connected to an internet protocol, IP, network. Messages released into the IP network with a recipient address are routed by the network to the recipient node identified by the recipient address. IP is not the only suitable networking technology used, for example, various peer-to-peer networking models are also suitable.

The delivery of the goods is separated into two sections: one section known only by the sender and the other section known only by the receiver. The relay separates the two sections between the sender and receiver. In Figure 2, couriers represented by SC2 and SC1 are booked by the sender and may be referred to as sender couriers. Couriers represented by RC1, RC2 and RC3 are booked by the receiver and may be referred to as receiver couriers.

The relay may simply be a place agreed by the sender and receiver, where exchange occurs from the sender courier to the receiver's courier. In theory, the relay could be simply a random meeting point for the couriers. The sender could then agree on a time and place for the package transmission. However, to make the transmission more practical, this relay could be the storage warehouse of one of the involved couriers or a locker with a code known by both involved couriers. However, it is to be appreciated that in some embodiments there may be some activity regarding the goods by the relay, for example transfer of the goods from a reception to a storage position and to a shipment position.

Real identities of the sender and the receiver may thus be hidden from each other. They may know each other by their temporary identifiers, such as public keys, that they used during the interaction that led to the delivery, such as an online purchase. They don't know each other's location but only the location of the relay. The sender, the receiver and the couriers may be configured to identify themselves with the public part of a public-private key pair that can be changed for every new transaction.

The delivery service may comprise a list of available couriers as well as a list of relay addres(ses) (addressPR). There are several ways for the sender and/or receiver to select the relay:
- A random place in the world. This provides maximum anonymity but also potentially maximum delivery cost.
- If the sender and/or receiver agree to share information about what area they are located in (e.g. their country), the relay location can be chosen accordingly. The larger the specified area the better the anonymity, but also the delivery costs likely increase.
- The sender or the receiver can also decide to provide false information on their area. This provides more anonymity and the delivery would simply be more expensive for them.

In some embodiments, the delivery service or a further (or second) smart contract is configured to select 110 the relay for the delivery of goods on the basis of an indication of a location area of the sender and an indication of a location area of the receiver. Such further smart contract may be also referred as a system or configuration smart contract, for example. The system smart contract may be also configured to perform at least some of the further features related to the relay selection and/or other features related to setting up the goods delivery (as compared to the multisignature contract(s) provided 140 for the delivery process and for validating the delivery). Such system smart contract may be initiated in response to a need to establish goods delivery and configured at least to arrange courier selection, but may also be configured to control other aspects related setting up goods delivery or for arriving at good delivery process or agreement illustrated below, such as the courier (pre)selection 120.

This enables to avoid a lack of consensus between the sender and receiver over the location of the relay. Once the sender and the receiver have revealed their area with the resolution of their choice (e.g. sender: London, receiver: Asia), an appropriate relay is decided on the basis of the received source and target location information. For example, the system smart contract may be configured to select the relay by minimizing the potential cost or by picking a pseudo-random relay within a reasonable area (e.g. Europe or Asia but not Africa nor America nor Pacific).

The selection 120 of couriers to and from the relay can be done by the sender and receiver respectively. The sender and/or receiver may publicize their need (origin, destination, delivery time and volume/weight of the parcel) and couriers bid to offer the best possible rate. In another embodiment, couriers publicize their offer (area covered and fares), and the sender and/or receiver selects the most suitable offer.

However a problem arises if they both pick the same couriers. In this case the courier would be able to link the origin and destination of the parcel.

In some embodiments, the sender couriers and the receiver couriers are of different subsets of available couriers, and the delivery service or the system smart contract is configured to select the sender couriers and the receiver couriers.

In order to avoid selection of the same courier as sender and receiver courier, the couriers may be divided into two subsets before the selection 120. The sender can select the couriers from one subset and the receiver from the other subset. Several deterministic methods are available for selection to be used to form the two subsets, such as a pseudorandom function with a seeds, such as time or sender and receiver's public keys. The selection method may aim to optimize balance in number and price between the two subsets.

Reference is now made to FIGURE 3 illustrating token distribution. For simplicity, FIGURE 3 illustrates the simplest case of delivery of goods (in this example Parcel) involving single courier per section, but it will be understood that similar procedures may be applied also for multiple couriers per section.

At least some of the tokens are courier-specific secret keys. Each courier-specific secret key is generated by a public key of an associated courier. However, it will be appreciated that various other types of codes may be used tokens and other generation methods may be applied.

The smart contract(s) for the goods delivery, in the present example embodiments the multi-signature contract(s), may be generated or adapted and provided 300 to a distributed network, such as a blockchain-based network, after the sender and receiver have agreed to the terms. The multi-signature contract may comprise separate contracts MdSC, MdRC for sender and receiver, respectively. The smart contract may be configured to validate the delivery of the goods in response to receiving from a courier a set of secret keys corresponding to a set of sender side and receiver side specific secret keys stored in the multi-signature contract in connection with agreeing on the delivery. For example, in order to prove that the courier's task has been performed and the goods have been delivered the courier needs to acquire three different secret keys. For example, for sender courier SC these keys are referred to as skdSC, skdSC', skdSC".

For example, a receiver courier RC selected to deliver the goods further from a sender courier SC may be provided with:
- the delivery identifier for the delivery of goods, in the example of Figure 3 referred to as parcel ID IDp,
- an identifier of a receiver (or a further third courier in case of multiple receiver couriers),
- a relay identifier,
- a first secret key skdRC' for proving that the courier was selected carry out the delivery,
- a second secret key skdSC" to be provided to the sender courier in response to receiving the goods from the sender courier,
- a third secret key skdRC", obtained upon reception of the goods from the receiver (or a further third courier) for proving delivery to the receiver (or the third courier) for the multi-signature contract.

The goods delivered (Parcel) may comprise a fourth (type of) secret key skdSC, skdRC associated with the receiver and/or sender multi-signature contracts (MdRC, MdSC), for proving that the courier has had the goods and to be used as one parameter for validating the delivery. There may be a single such secret key for all couriers or a specific key skdSC, skdRC for each courier. Each of these secret keys may be encrypted with the couriers' public keys (pkSC, pkRC).

For example, the sender may coordinate or control the establishment or configuration of the multi-signature smart contract and provide (in connection with block 150 of Figure 1) 300, 301, 302 at least some of the secret keys for the multi-signature contract, the receiver, and at least some couriers. The sender may thus send 301 the second secret key skdSC" to the receiver, which is further provided to the receiver courier RC to be provided 305 to the sender courier SC in response to receiving the goods.

However, in another embodiment, the receiver establishes or provides the keys, whereby the receiver may send the second secret key skdSC"to the sender (and the (first) receiver courier RC). As the relay may be a passive place, the key skdSC" needed by the last courier on the sender side (SC in Figure 3) is provided 305 by the first courier on the receiver side (RC). The receiver provides for the receiver courier RC the first secret key skdRC' in connection with courier assignment (e.g. at block 150) and the third secret key skdRC" 303 in response to receiving the goods.

If there are e.g. multiple receiver couriers, they are each provided with the IDp, the first type of secret key (skdRC1', skdRC2", etc), and the second type of secret key (skdSC", skdRC1", skdRC2", etc) to be provided for a preceding courier when receiving the goods.

FIGURE 3 also illustrates provision of secret keys to the multi-signature contract for goods delivery by the couriers. The multi-signature contract may be configured to validate the delivery of the goods from the sender courier SC to the receiver courier RC in response to receiving 306 from the SC the first type of secret key skdSC', the second secret key skdSC", and the fourth secret key skdSC of the goods. Similarly, the delivery by the receiver courier to the receiver may be validated in response to receiving 307 from the receiver courier RC its first secret key skdRC", third key skdRC" received from the receiver, and the fourth secret key skdSC.

The delivery identifier of the parcel IDp may be any suitable identifier, such as a random number. For example, it may be a function of the sender and receivers public keys such as a hash of the two concatenated keys. IDp may be chosen sequentially as deliveries are requested (1, 2, 3...) or maybe completely chosen by the sender or receiver.

It is to be appreciated that the above provides just some examples and the token provision and utilization and validation may be arranged in various other ways. For example, some other and/or further parameters than the above illustrated secret keys may be applied, or some of the secret keys may be avoided or replaced by other type of token, such as the first secret key.

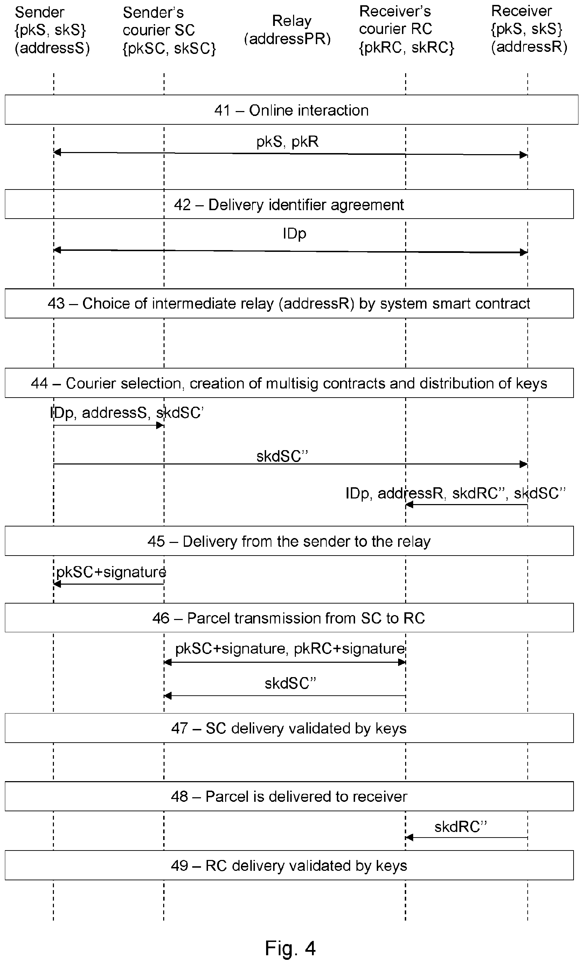

FIGURE 4 illustrates a summarizing process in a simplified system of Figure 3.
41. The sender and the receiver interact online (e.g. for a purchase of a parcel) and know each other by their temporary public keys (pkS and pkR respectively).
42. Following this interaction, e.g. a postal delivery may be agreed between sender and the receiver. As a result this transaction they produce a parcel identifier IDp, which could be a function of pkS and pkR.
43. The sender and the receiver share their approximate location (e.g. continent, country) with a decentralized delivery service provided in/by the distributed network, which decides on a relay location addressPR.
44. The sender and the receiver use the decentralised delivery service to organise the delivery to and from the addressPR. Once the couriers are selected, the sender and the receiver create respective multi-signature contracts MdSC and MdRC that they publish on the blockchain. Further, they distribute the corresponding secret keys.
45. The sender courier SC collects the parcel after identifying itself with a signature performed with its key pair (public key pkSC, secret key skSC) and delivers the parcel to the relay.
46. The receiver courier RC collects the parcel at the relay after identifying itself (e.g. similarly by its key pair as the SC in step 5), and provides the skdSC" to sender courier SC.
47. The SC provides the collected keys for the multi-signature contract for validation and subsequent remuneration.
48. The receiver courier RC delivers the parcel to the receiver. The receiver provides the RC with the key skdRC" .
49. The RC provides the collected keys for the multi-signature contract for validation and subsequent remuneration.

In some embodiments, at least one relay of the delivery system is an active relay and configured to perform at least one anonymization function for the goods, such as a parcel or packet.

A first delivery segment identifier may be defined (in block 100) for the delivery of goods from the sender to the active relay and a second delivery segment identifier may be defined for the delivery of goods from the sender to the active relay. These first and second segment identifiers may be generated by a sender device and a receiver device each performing the method of Figure 1, respectively. The first delivery segment identifier is provided to the one or more sender couriers, the second delivery segment identifier is provided to the one or more receiver couriers, and the first delivery identifier and the second delivery identifier is provided to the active relay. These first and second delivery segment identifiers may also be respectively referred to as sending path and reception path identifiers, for example. Since there may be more than one active relay, it is to be understood that there may be further (intermediate) delivery segments and respective identifiers.

The active relay may be configured to remove the first delivery segment identifier upon receiving the goods, and associate the goods with the second delivery segment identifier before causing sending of the goods for the one or more receiver couriers.

This embodiment and method to communicate the different delivery identifiers does not require the sender and receiver to know each other's delivery (segment) identifiers nor the relay to learn about the sender and receiver's location. Furthermore, the present cryptographic infrastructure allows authenticated, automatic payment settlement after a successful delivery.

The active relay may be configured to operate or control a repackaging service that changes the packaging of the goods to avoid recognizing the goods after it is processed by this service. That way, even if the whole delivery is organised by a single courier company, the courier company would not be able to track the goods all the way. Contrary to existing repackaging services, the present active relay may be ignorant of the identity or address of the sender and receiver.

The active relay(s) may be distributed on a territory. Each of them may be identified by an asymmetric key pair backed by a certification authority. The list of relays may be made public. A condition for the delivery system to be anonymous is that the relays need to remain independent from the couriers. Individually, the relay or the couriers cannot link the sender and the receiver but they could if they all colluded together.

The choice of the active relay that will be used for a given delivery may be done in different ways, for example: For maximum anonymity, the active relay should be picked at random, for example using a pseudorandom function using seeds such as time, identifiers of the sender and receiver. For a more economical option, the sender and the receiver can pick their preferred area for the active relay. If they are concerned about anonymity they can pick a wide area or an area different form where they actually are. The system may be configured to select an active relay that is the closest to equal estimated cost for the sender and receiver.

Once the active relay is chosen, the sender and receiver arrange the delivery to and from the relay respectively. In some embodiments, at least some of the above illustrated features are applied for selecting the active relay. For example, a system or configuration smart contract may be applied to select the active relay.

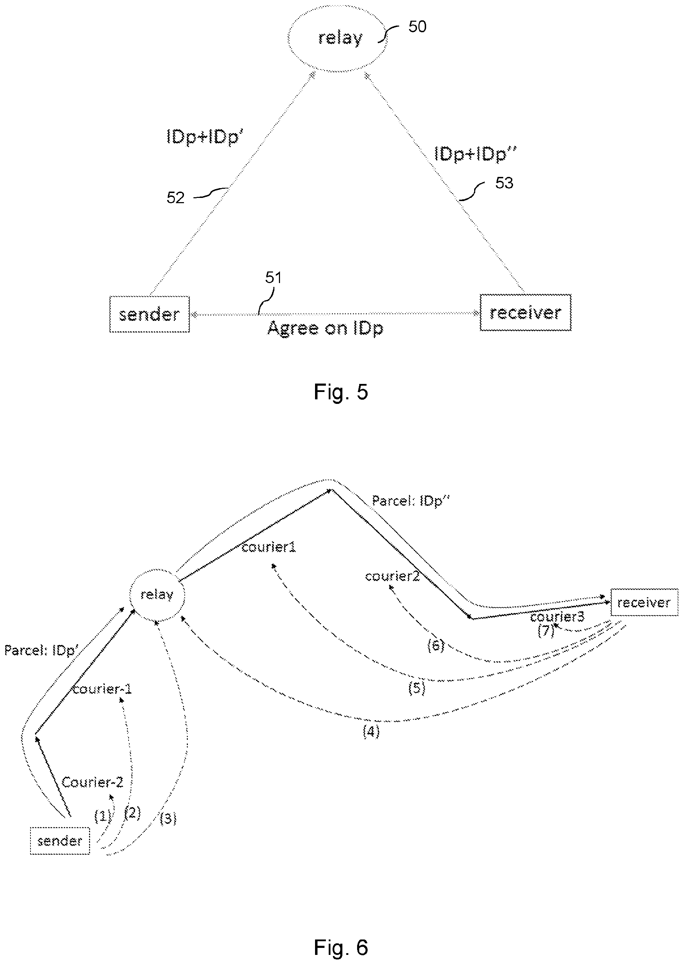

FIGURE 5 illustrates a simplified example of goods delivery agreement system with an active relay 50. The active relay may be configured to change or control change of the identifier of the goods. For example, the identifiers could be bar codes on a sticker label. Thus, the sticker is removed and a new one is placed on the goods. These identifiers can be communicated to the active relay as follows: During the transaction that leads the sender and receiver to agree on the delivery, e.g. an online transaction, they may communicate through an asymmetric encryption channel with key pairs, which may be generated only for this purpose and never reused. They may agree 51 on an identifier IDp, which may be referred to as a (goods or parcel) delivery identifier or a transaction identifier, similarly as illustrated above. The choice of this delivery or transaction identifier doesn't matter. It could be deterministic such as provided by the delivery system sequentially. It could be pseudo-random such as a function of the sender's public key, the receiver's public key and time. Alternatively, the delivery or transaction identifier may be randomly chosen by the sender or the receiver.

The sender and the receiver are now further configured to separately generate a delivery segment identifier each: IDp' and IDp" respectively. These delivery segment identifiers may be random identifiers, for example.

The sender sends 52 the IDp and IDp' to the active relay 50 and the receiver sends 53 the IDp and IDp" to the active relay. Therefore, the active relay knows that IDp' is associated with IDp" but no one else knows this. The IDp is not needed by the active relay anymore. The IDp' will be the identifier of the goods, in the present examples parcel, from the sender to the relay 50 and the IDp" will be the identifier of the parcel from the relay 50 to the receiver The only information possessed by the active relay is that, whenever it receives a parcel identified with the IDp', it needs to change it to the IDp". Notice that the courier from sender to relay only knows IDp' (linking sender and relay addresses); whereas the courier from relay to receiver only knows IDp" (linking relay and receiver addresses).

The active relay 50 may also be configured to change or control change of appearance of the parcel. This may be comprise (re-)packetizing the parcel. In an embodiment, the parcel is transported inside a box that would be changed by the active relay 50. This box could be tamper-proof, tamper-detectable, and/or locked with a code. The code may be communicated from the sender to the relay. When the active relay receives the box with the IDp', it opens it and may place the parcel in another box. The active relay communicates the code of this new box to the receiver.

The anonymous goods delivery service applying the active relay may apply at least some of the above-illustrated features on the smart contract generated and provided for the goods delivery to the distributed network. For example, a blockchain smart contract may be configured to control the market place where couriers offer services that are bought by users using the blockchain's cryptocurrency.

The validation of the goods delivery and also the payment of the couriers can be performed by multi-signature smart contract(s) that may be configured to execute the payment after validating the completion of a delivery task. The active relay service provider can be paid similarly as the couriers, or prior to the delivery. During this bidding process couriers and users identify themselves with the public part of a public-private key pair {pk, sk}. All the communication between stakeholders is assumed to be encrypted using the public key of a receiving entity and signed using the private key of a sending entity. In order to ensure anonymity, these key pairs can be changed for each delivery task.

The complete delivery from the sender to the receiver of the goods can be composed of several delivery tasks by different couriers. At the transmission of the parcel from one courier to the other, the couriers may be configured to identify each other on the basis of their respective public keys. The public key of each courier may thus be transmitted to the other courier(s) (in the respective delivery segment) by the delivery system. Verification of the public key authenticity can be performed by digital signatures.

The multi-signature smart contract may be configured to validate the delivery of goods for at least part of the delivery path on the basis of tokens or secret keys, or in some embodiments signatures, received from the associated couriers and corresponding information stored in the smart contract upon generation of the smart contract. The active relay may also be configured to provide tokens or secret keys to the smart contract, signed by a cryptographic signature of the active relay.

The multi-signature contract may be signed by the associated entities (e.g. the sender, the sender couriers, and the active relay) as part of the goods delivery agreement establishment stage. The smart contract may be created even for each courier. The smart contract(s) for the deliveries on the sender side of the active relay (sender segment) may be created by a goods delivery application of a sender's device and the smart contract(s) on the receiver side (receiver segment) by an application of a receiver's device.

Cryptographic (secret) keys may be distributed by the sender and the receiver along the path of the parcel. For example, a first key is placed on the parcel, a second key is provided directly to a first courier, a third key is provided to the next courier and a fourth key is provided to the relay (on the sender side) or kept by the receiver (on the receiver side). All these keys may be required for the courier to prove execution of respective delivery task. For example, the keys required to validate delivery to and trigger the payment for a 2^{nd} courier (courier 2) in the delivery path could be:
- sdk2: a key printed on the parcel (to make sure the right parcel has been passed along).
- sdk2': a key provided directly to the courier (to make sure the courier was actually the appointed one).
- sdk2": a key provided to 3^{rd} courier (courier 3; the next courier in the path) and provided to the 2^{nd} courier when the parcel is passed on.
- sdk2‴: a key kept by the receiver. The receiver uses this key to sign the reception of the goods of each courier only if the whole delivery is completed (to make sure the couriers do not collude with each other and communicate the keys to each other without completing the delivery).

FIGURE 6 illustrates an example of applying different keys and identifiers provided to each party in a case where two couriers, courier-2 and courier-1, are used between sender and the active relay, and three couriers, couriers 1-3, are used between the active relay and the receiver (the addresses of parcel pickup and delivery are not shown).

The codes printed on the parcel before the active relay are IDp', sdk-1 and sdk-2. The other information distributed by the sender (left hand side of the diagram) include the parcel ID', the multi-signature secret key (sdk) and the public key of the other courier:
(1) sdk-2', IDp', pk-1
(2) sdk-1', sdk-2", IDp', pk-2
(3) sdk-1", sdk1‴, sdk2‴, pk-1, IDp, IDp'

Table 1 illustrates the multi-signature keys and identifying public keys transmitted to each courier at the sending segment from the sender to the active relay:

**Table 1.**

| **Sender messages** | **Courier key** | **Previous courier validation key** | **Previous courier identifying key** | **Next courier identifying key** |
|---|---|---|---|---|
| (1) | sdk-2' | -- | -- | pk-1 |
| (2) | sdk-1' | sdk-2" | pk-2 | -- |
| (3) -relay | -- | sdk-1" | pk-1 | -- |

At delivery of the parcel, the active relay can sign the reception of the goods for the (sending segment) smart contract (for validating the delivery from the sender to the active relay and also the payment) for both courier-2 and courier-1, using sdk-2" and sdk-1‴:
(4) The receiver provides the active relay with the delivery identifier IDp and the public key of the first courier pk1. It also receives information to be printed on the parcel after repackaging: IDp", sdk1, sdk2 and sdk3.

The other keys distributed by the receiver to the couriers are:
(5) sdk1', pk2
(6) sdk1", sdk2', pk1, pk3
(7) sdk2", sdk3' pk2, (before delivery), sk3" (at delivery)

Table 2 illustrates the multi-signature keys and identifying public keys transmitted to each courier at the reception segment from the active relay to the receiver:

**Table 2.**

| **Receiver messages** | **Courier key** | **Previous courier validation key** | **Previous courier identifying key** | **Next courier identifying key** |
|---|---|---|---|---|
| (4) -relay | -- | -- | -- | pk1 |
| (5) | sdk1' | -- | -- | pk2 |
| (6) | sdk2' | sdk1" | pk1 | pk3 |
| (7) | sdk3' | sdk2" | pk2 | -- |

At delivery of the parcel, the receiver can sign the reception of the goods (for validating the delivery and also payment of the couriers 1, 2 and 3) using sdkl"', sdk2‴ and sdk3‴.

In some embodiments, the smart contract (for the goods delivery and/or system) is a blockchain smart contract provided by a blockchain transaction to a blockchain-based network for validation. Information of the goods delivery and the smart contract may thus be stored in a blockchain ledger and applied for at least part of goods delivery between a sender and a receiver for automatically monitoring and validating the delivery. A distributed ledger can be considered a general database synchronized between many parties, which, at successive time instances, comprises successive states of consensus about a particular matter, here the good delivery process. Such states may be reached by the many parties, typically nodes in a peer-to-peer (P2P) network, following a decentralized consensus algorithm. In general, this provides an agreement between the nodes without assuming trust between them. Different service providers may oversee in the distributed ledger that every participant participating in the decentralized goods delivery process is playing by the rules set by the sender and the receiver.

In some embodiments, also with reference to FIGURE 2, the distributed network is a blockchain network and the nodes operate as blockchain nodes and store local blockchain database. Blockchain state information shared by the nodes may store all the transactions and history carried out in the network, also regarding the smart contract or other goods delivery process management related information. The blockchain state information is stored in or as the blockchain ledger. Each node may comprise the ledger whose content is in sync with other ledgers. The nodes may validate and commit transactions in order to reach consensus. Each node may have their own copy of the ledger which is in some embodiments permission-controlled, so participants see only appropriate transactions.

Changes in resource ownership in the blockchain take the form of blockchain transactions secured by strong cryptography. A blockchain transaction may comprise an identifier of a new owner, that is the recipient, of the resource, together with a cryptographic signature of the previous owner, that is the sender, such that malicious attackers cannot reassign resources they do not own. Application of blockchain technology and the ledger enable a way to track the unique history of transactions by the individual nodes in the network.

A blockchain transaction comprising the smart contract information may be a public transaction. The transaction record comprises the smart contract information, such as the multi-signature contracts with courier-specific secret keys as illustrated above, and a hash pointer to previous block of the chain. The record may comprise also further information element(s), such as timestamp.

The sender S, the receiver R or another entity generating the smart contract on behalf of the sender and the receiver, may provide a signed blockchain transaction to the blockchain ledger whenever it generates or updates a smart contract. To establish a next block, the transactions are broadcast into the blockchain network. Broadcasting here refers to a dissemination method suitable for the context, which will cause the transactions to be communicated to the nodes of the network in general. Reaching each and every node with each and every transaction is not strictly necessary.

A node establishing the next block may be known as a miner node. A miner node may compile a set of transactions, which it receives from the broadcasts, for the next block, and search for a proof-of-work code that covers all the transactions in the set of transactions for the next block. For example, the proof-of-work code may be a numerical value, with which the contents of the next block, that is, the set of transactions, hashes to a value that is less than a threshold. More generally, there may be a target area of an output space of a hash function, wherein the target space need not be in the low end of the target space. The smaller the target area is, the more difficult it is to discover the proof-of-work. Once a miner discovers the proof-of-work, it can publish the block, which other nodes of the system will then add to the block chain as the new most recent established block.

In case the miner node discovers a proof-or-work based on an incomplete set of transactions, for example if some transactions did not reach the miner node, other nodes in the network will not accept the block into the blockchain, and it will be excluded from a consensus version of the blockchain in the system.

Since an output of a hash function is a pseudorandom function of the input, the set of transactions, hashed by itself, produces a hash value that is essentially randomly placed in the output space of the hash function. The set of transactions may be completely or representatively used as input to the hash function. Modifying the input with a candidate proof-of-work code, which may be known as a nonce, will produce a new hash value, which again is essentially randomly placed in the output space of the hash function. The modification may be as slight as a single bit. Therefore, searching for the correct proof-of-work code, which satisfies a pre-agreed criterion concerning its location in the output space of the hash function, requires repeatedly deriving a hash value with a different candidate proof-of-work code modifying the input to the hash function. Once a proof-of-work code that, with the transactions, produces a hash value in the target area of the output space of the hash function is found, the block is ready. A completed block may be distributed to the system to establish it in the blockchain. Although discussed above in terms of proof-of-work, in some embodiments a proof-of-stake may be used instead of, or additionally to, a proof-of-work. In a proof-of-stake based system, a new block is accepted once a sufficient fraction of resources are proven as owned by nodes ready to accept the new block version.

Once a new block is established, the blockchain becomes longer. A transaction is considered the more reliable, the larger the number of blocks established since the block where the transaction is comprised. This is since transactions are hashed into the chain of blocks, and discrepancies in the block chain are resolved as the block chain gets longer. In each next block in the sequence, a hash of the previous block may be included along with the transactions, attaching the blocks to each other to form the chain. Hashes linking the blocks together to form a chain may be referred to as Merkle hashes. Maliciously modifying a transaction in a block far down the chain would involve re-doing the work of finding proofs for all subsequent blocks, since the input to the hash function for the block comprising the transaction would be changed, causing the resulting hash value, with the proof in that block, to no longer be disposed in the desired area in the output space of the hash function.

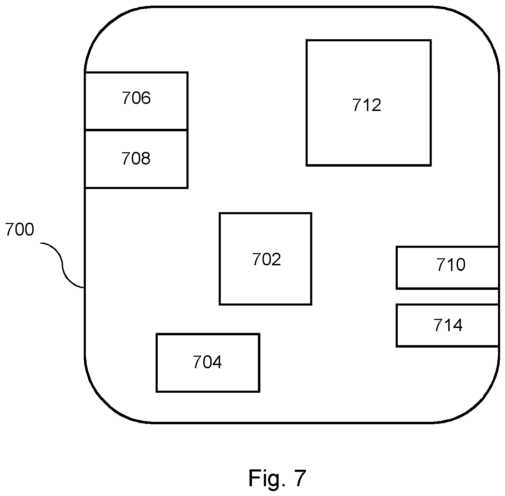

FIGURE 7 illustrates an example apparatus capable of supporting at least some embodiments of the present invention. Illustrated is a device 700, which may comprise a communications device arranged to operate as a node in a distributed network, such as a blockchain-based system. The device may be arranged to carry out at least some of the embodiments related to arranging decentralized anonymous goods delivery via one or more couriers as illustrated above. The device may include one or more controllers configured to carry out or cause operations in accordance with at least some of the embodiments illustrated above, such as some or more of the steps illustrated above in connection with Figures 1 to 6. The device may operate as a control device of a sender, a receiver, or a service provider of a goods delivery process.

Comprised in the device 700 is a processor 702, which may comprise, for example, a single- or multi-core processor wherein a single-core processor comprises one processing core and a multi-core processor comprises more than one processing core. The processor 702 may comprise more than one processor. The processor may comprise at least one application-specific integrated circuit, ASIC. The processor may comprise at least one field-programmable gate array, FPGA. The processor may be means for performing method steps in the device. The processor may be configured, at least in part by computer instructions, to perform actions.

The device 700 may comprise memory 704. The memory may comprise random-access memory and/or permanent memory. The memory may comprise at least one RAM chip. The memory may comprise solid-state, magnetic, optical and/or holographic memory, for example. The memory may be at least in part accessible to the processor 702. The memory may be at least in part comprised in the processor 702. The memory 704 may be means for storing information. The memory may comprise computer instructions that the processor is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The memory may be at least in part comprised in the processor. The memory may be at least in part external to the device 700 but accessible to the device. For example, control parameters affecting operations related to the generation and/or application of smart contract may be stored in one or more portions of the memory and used to control operation of the apparatus. Further, the memory may comprise devicespecific cryptographic information, such as secret and public key of the device 700.

The device 700 may comprise a transmitter 706. The device may comprise a receiver 708. The transmitter and the receiver may be configured to transmit and receive, respectively, information in accordance with at least one wired or wireless, cellular or noncellular standard. The transmitter may comprise more than one transmitter. The receiver may comprise more than one receiver. The transmitter and/or receiver may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example. The device 700 may comprise a near-field communication, NFC, transceiver 710. The NFC transceiver may support at least one NFC technology, such as NFC, Bluetooth, Wibree or similar technologies.

The device 700 may comprise user interface, UI, 712. The UI may comprise at least one of a display, a keyboard, a touchscreen, a vibrator arranged to signal to a user by causing the device to vibrate, a speaker and a microphone. A user may be able to operate the device via the UI, for example to accept incoming telephone calls, to originate telephone calls or video calls, to browse the Internet, to manage digital files stored in the memory 704 or on a cloud accessible via the transmitter 706 and the receiver 708, or via the NFC transceiver 710, and/or to play games.

The device 700 may comprise or be arranged to accept a user identity module or other type of memory module 714. The user identity module may comprise, for example, a subscriber identity module, SIM, and/or a personal identification IC card installable in the device 700. The user identity module 714 may comprise information identifying a subscription of a user of device 700. The user identity module 714 may comprise cryptographic information usable to verify the identity of a user of device 700 and/or to facilitate encryption and decryption of communication effected via the device 700, such as the private and/or public keys as illustrated above.

The processor 702 may be furnished with a transmitter arranged to output information from the processor, via electrical leads internal to the device 700, to other devices comprised in the device. Such a transmitter may comprise a serial bus transmitter arranged to, for example, output information via at least one electrical lead to memory 704 for storage therein. Alternatively to a serial bus, the transmitter may comprise a parallel bus transmitter. Likewise the processor may comprise a receiver arranged to receive information in the processor, via electrical leads internal to the device 700, from other devices comprised in the device 700. Such a receiver may comprise a serial bus receiver arranged to, for example, receive information via at least one electrical lead from the receiver 708 for processing in the processor. Alternatively to a serial bus, the receiver may comprise a parallel bus receiver.

The device 700 may comprise further devices not illustrated in Figure 7. For example, the device may comprise at least one digital camera. Some devices may comprise a back-facing camera and a front-facing camera. The device may comprise a fingerprint sensor arranged to authenticate, at least in part, a user of the device. In some embodiments, the device lacks at least one device described above. For example, some devices may lack the NFC transceiver 710 and/or the user identity module 714.

The processor 702, the memory 704, the transmitter 706, the receiver 708, the NFC transceiver 710, the UI 712 and/or the user identity module 714 may be interconnected by electrical leads internal to the device 700 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

It is to be appreciated that in addition to one or more controlling apparatuses as illustrated in connection with Figure 7, the goods delivery system may comprise various further unit or elements, at least some of which may be controlled by a control apparatus as in Figure 7. For example, the system may comprise goods packaging unit(s), goods processing unit(s), and/or goods identification unit(s), such identification label affixing and/or removal unit.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

References throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. The skilled person will appreciate that above-illustrated embodiments may be combined in various ways. Embodiments illustrated in connection with Figures 1 to 4 may be taken in isolation or further combined together.

Various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in communications.

### ACRONYMS LIST

- ASIC: Application-specific integrated circuit
- BC: Blockchain
- FPGA: Field-programmable gate array
- GSM: Global system for mobile communication
- IC: Integrated Circuit
- LTE: Long term evolution
- NFC: Near-field communication
- PoS: Proof-of-stake
- PoW: Proof-of-work
- RC: Receiver courier
- SC: Sender courier
- UI: User interface
- WCDMA: Wideband code division multiple access,
- WiMAX: Worldwide interoperability for microwave access
- WLAN: Wireless local area network

## Claims

1. A method for an apparatus for establishing anonymity for goods delivery, comprising:
- defining (100) a delivery identifier for delivery of goods from a sender to a receiver,
- defining (110) a relay for the delivery of goods,
- selecting (120) one or more sender couriers to send the goods to the relay and/or selecting one or more receiver couriers to receive the goods from the relay,
- generating (130) for the goods delivery a smart contract comprising cryptographic tokens for confirming delivery, wherein the smart contract is a computerized transaction protocol,
- providing (140) the smart contract for the goods delivery to the distributed network, and
- providing (150) the cryptographic tokens, the delivery identifier and an identifier of the relay to the selected one or more couriers, wherein
the smart contract for the goods delivery is configured to receive (306; 307) cryptographic tokens from the couriers and validate the delivery of the goods between the sender and the relay by the one or more sender couriers and between the relay and receiver by the one or more receiver couriers on the basis of the received cryptographic tokens and sender and receiver specific cryptographic information stored in the smart contract in connection with agreeing on the delivery,
the providing (150) the cryptographic tokens comprises providing, for a second courier selected to deliver the goods further from a first courier: a first cryptographic token for proving that the second courier was selected for the delivery, a second cryptographic token to be provided to the first courier in response to receiving the goods from the first courier, and a third cryptographic token, obtained upon reception of the goods from the receiver or a third courier for proving delivery to the receiver or the third courier for the smart contract for the goods delivery, and
wherein the smart contract is a multi-signature contract comprising signatures of at least the selected couriers and provided by a blockchain transaction to a blockchain-based network for validation, and the tokens are courier-specific secret keys, each courier-specific secret key being generated by a public key of a respective courier.

2. The method of claim 1, wherein the second courier is provided with:
- the delivery identifier for the delivery of goods,
- a first secret key for proving that the second courier was selected to carry out the delivery,
- a second secret key to be provided to the first courier in response to receiving the goods from the first courier,
- a third secret key, obtained upon reception of the goods from the receiver or a third courier for proving delivery to the receiver or the third courier for the smart contract for the goods delivery, and
- an identifier of the third courier or the receiver.

3. The method of claim 2, wherein the smart contract is configured to validate a delivery of the goods from the first courier to the second courier in response to receiving the second secret key, a fourth secret key associated with the goods, and a fifth secret key provided to the first courier for proving that the first courier was selected to carry out the delivery.

4. The method of any preceding claim, wherein the relay is selected (110) for the delivery of goods on the basis of an indication of a location area of the sender and an indication of a location area of the receiver.

5. The method of any preceding claim, wherein a system smart contract is configured to select the one or more sender couriers and the one or more receiver couriers, and/or the relay is an active relay and configured to perform at least one anonymization function for the goods.

6. An apparatus comprising means for performing:
- defining (100) a delivery identifier for delivery of goods from a sender to a receiver,
- defining (110) a relay for the delivery of goods,
- selecting (120) one or more sender couriers to send the goods to the relay and/or selecting one or more receiver couriers to receive the goods from the relay,
- generating (130) for the goods delivery a smart contract comprising cryptographic tokens for confirming delivery, wherein the smart contract is a computerized transaction protocol and is configured to validate delivery of the goods on the basis of tokens from the couriers,
- providing (140) the smart contract for the goods delivery to the distributed network, and
- providing (150) the cryptographic tokens, the delivery identifier and an identifier of the relay to the selected one or more couriers, wherein
the smart contract for the goods delivery is configured to receive (306; 307) cryptographic tokens from the couriers and validate the delivery of the goods between the sender and the relay by the one or more sender couriers and between the relay and receiver by the one or more receiver couriers on the basis of the received cryptographic tokens and sender and receiver specific cryptographic information stored in the smart contract in connection with agreeing on the delivery,
the means are configured to provide, for a second courier selected to deliver the goods further from a first courier: a first cryptographic token for proving that the second courier was selected for the delivery, a second cryptographic token to be provided to the first courier in response to receiving the goods from the first courier, and a third cryptographic token, obtained upon reception of the goods from the receiver or a third courier for proving delivery to the receiver or the third courier for the smart contract for the goods delivery, and
wherein the smart contract is a multi-signature contract comprising signatures of at least the selected couriers and the means are configured to provide the smart contract for validation to a blockchain-based network by a blockchain transaction, and the tokens are courier-specific secret keys, each courier-specific secret key being generated by a public key of a respective courier.

7. The apparatus of claim 6, wherein the means are further configured to provide the second courier with:
- the delivery identifier for the delivery of goods,
- a first secret key for proving that the second courier was selected to carry out the delivery,
- a second secret key to be provided to the first courier in response to receiving the goods from the first courier,
- a third secret key, obtained upon reception of the goods from the receiver or a third courier for proving delivery to the receiver or the third courier for the smart contract for the goods delivery, and
- an identifier of the third courier or the receiver.

8. The apparatus of claim 7, wherein the smart contract for the goods delivery is configured to validate a delivery of the goods from the first courier to the second courier in response to receiving the second secret key, a fourth secret key associated with the goods, and a fifth secret key provided to the first courier for proving that the first courier was selected to carry out the delivery.

9. The apparatus of any preceding claim 6 to 8, wherein the relay is selected (110) for the delivery of goods on the basis of an indication of a location area of the sender and an indication of a location area of the receiver.

10. The apparatus of any preceding claim 6 to 9, wherein the means are configured to select (120) the one or more sender couriers and the one or more receiver couriers from different subsets of available couriers.

11. The apparatus of any preceding claim 6 to 10, wherein the apparatus comprises a system smart contract configured to select (120) the one or more sender couriers and the one or more receiver couriers.

12. The apparatus of any preceding claim 6 to 11, wherein the relay is an active relay and configured to perform at least one anonymization function for the goods.

13. The apparatus of claim 12, wherein the means are further configured to perform:
define a first delivery segment identifier for the delivery of goods from the sender to the active relay and provide the first delivery segment identifier to the one or more sender couriers,
define a second delivery segment identifier for the delivery of goods from the sender to the active relay and provide the second delivery segment identifier to the one or more receiver couriers, and
define and provide the first delivery segment identifier and the second delivery segment identifier to the active relay.

14. The apparatus of claim 13, wherein the active relay is configured to remove the first identifier upon receiving the goods, and associate the goods with the second delivery segment identifier before causing sending of the goods for the one or more receiver couriers.

15. A computer program comprising a set of computer readable instructions that, when executed by at least one processor (702), cause an apparatus to perform the method of any preceding claim 1 to 5.

## Patentansprüche

1. Verfahren für eine Vorrichtung zum Herstellen einer Anonymität für eine Warenlieferung, das Folgendes umfasst:
- Definieren (100) einer Lieferkennung für eine Lieferung von Waren von einem Absender an einen Empfänger,
- Definieren (110) eines Weiterleiters für die Lieferung von Waren,
- Auswählen (120) von einem oder mehreren Absenderkurieren zum Senden der Waren an den Weiterleiter und/oder Auswählen von einem oder mehreren Empfängerkurieren zum Empfangen der Waren vom Weiterleiter,
- Erzeugen (130) eines intelligenten Vertrags, der kryptographische Tokens zum Bestätigen einer Lieferung umfasst, für die Warenlieferung, wobei der intelligente Vertrag ein computergestütztes Transaktionsprotokoll ist,
- Bereitstellen (140) des intelligenten Vertrags für die Warenlieferung für das verteilte Netzwerk, und
- Bereitstellen (150) der kryptographischen Tokens, der Lieferkennung und einer Kennung des Weiterleiters für den einen oder die mehreren ausgewählten Kuriere, wobei
der intelligente Vertrag für die Warenlieferung dazu ausgelegt ist, kryptographische Tokens von den Kurieren zu empfangen (306; 307) und die Lieferung der Waren zwischen dem Absender und dem Weiterleiter durch den einen oder die mehreren Absenderkuriere und zwischen dem Weiterleiter und dem Empfänger durch den einen oder die mehreren Empfängerkuriere auf Basis der empfangenen kryptographischen Tokens und von sender- und empfängerspezifischen kryptographischen Informationen, die im intelligenten Vertrag gespeichert sind, in Verbindung mit einem Einverständnis über die Lieferung zu validieren,
das Bereitstellen (150) der kryptographischen Tokens das Bereitstellen von Folgendem für einen zweiten Kurier umfasst, der zum Weiterliefern der Waren von einem ersten Kurier ausgewählt ist: einem ersten kryptographischen Token zum Belegen, dass der zweite Kurier für die Lieferung ausgewählt wurde, einem zweiten kryptographischen Token, das in Reaktion auf das Empfangen der Waren vom ersten Kurier dem ersten Kurier bereitzustellen ist, und einem dritten kryptographischen Token, das nach Empfang der Waren vom Empfänger oder einem dritten Kurier zum Belegen einer Lieferung an den Empfänger oder den dritten Kurier für den intelligenten Vertrag für die Warenlieferung erhalten wird, und
wobei der intelligente Vertrag ein Vertrag mit mehreren Unterschriften ist, der Unterschriften mindestens von den ausgewählten Kurieren umfasst und einem blockkettenbasierten Netzwerk zur Validierung von einer Blockkettentransaktion bereitgestellt wird, und die Tokens kurierspezifische geheime Schlüssel sind, wobei jeder kurierspezifische geheime Schlüssel durch einen öffentlichen Schlüssel eines jeweiligen Kuriers erzeugt wird.

2. Verfahren nach Anspruch 1, wobei der zweite Kurier mit Folgendem ausgestattet ist:
- der Lieferkennung für die Lieferung von Waren,
- einem ersten geheimen Schlüssel zum Belegen, dass der zweite Kurier zum Abwickeln der Lieferung ausgewählt wurde,
- einem zweiten geheimen Schlüssel, der in Reaktion auf das Empfangen der Waren vom ersten Kurier dem ersten Kurier bereitzustellen ist,
- einem dritten geheimen Schlüssel, der nach Empfang der Waren vom Empfänger oder einem dritten Kurier zum Belegen einer Lieferung an den Empfänger oder den dritten Kurier für den intelligenten Vertrag für die Warenlieferung erhalten wird, und
- einer Kennung des dritten Kuriers oder des Empfängers.

3. Verfahren nach Anspruch 2, wobei der intelligente Vertrag dazu ausgelegt ist, in Reaktion auf das Empfangen des zweiten geheimen Schlüssels, eines vierten geheimen Schlüssels, der mit den Waren verknüpft ist, und eines fünften geheimen Schlüssels, der dem ersten Kurier zum Belegen, dass der erste Kurier zum Abwickeln der Lieferung ausgewählt wurde, eine Lieferung der Waren vom ersten Kurier an den zweiten Kurier zu validieren.

4. Verfahren nach einem der vorhergehenden Ansprüche, wobei der Weiterleiter für die Lieferung von Waren auf Basis einer Anzeige eines Standortbereichs des Absenders und einer Anzeige eines Standortbereichs des Empfängers ausgewählt (110) wird.

5. Verfahren nach einem der vorhergehenden Ansprüche, wobei ein intelligentes Vertragssystem dazu ausgelegt ist, den einen oder die mehreren Absenderkuriere und den einen oder die mehreren Empfängerkuriere auszuwählen, und/oder der Weiterleiter ein aktiver Weiterleiter und dazu ausgelegt ist, mindestens eine Anonymisierungsfunktion für die Waren durchzuführen.

6. Vorrichtung, die Mittel zum Durchführen von Folgendem umfasst:
- Definieren (100) einer Lieferkennung für eine Lieferung von Waren von einem Absender an einen Empfänger,
- Definieren (110) eines Weiterleiters für die Lieferung von Waren,
- Auswählen (120) von einem oder mehreren Absenderkurieren zum Senden der Waren an den Weiterleiter und/oder Auswählen von einem oder mehreren Empfängerkurieren zum Empfangen der Waren vom Weiterleiter,
- Erzeugen (130) eines intelligenten Vertrags, der kryptographische Tokens zum Bestätigen einer Lieferung umfasst, für die Warenlieferung, wobei der intelligente Vertrag ein computergestütztes Transaktionsprotokoll ist und dazu ausgelegt, eine Lieferung der Waren auf Basis der Tokens von den Kurieren zu validieren,
- Bereitstellen (140) des intelligenten Vertrags für die Warenlieferung für das verteilte Netzwerk, und
- Bereitstellen (150) der kryptographischen Tokens, der Lieferkennung und einer Kennung des Weiterleiters für den einen oder die mehreren ausgewählten Kuriere, wobei
der intelligente Vertrag für die Warenlieferung dazu ausgelegt ist, kryptographische Tokens von den Kurieren zu empfangen (306; 307) und die Lieferung der Waren zwischen dem Absender und dem Weiterleiter durch den einen oder die mehreren Absenderkuriere und zwischen dem Weiterleiter und dem Empfänger durch den einen oder die mehreren Empfängerkuriere auf Basis der empfangenen kryptographischen Tokens und von sender- und empfängerspezifischen kryptographischen Informationen, die im intelligenten Vertrag gespeichert sind, in Verbindung mit einem Einverständnis über die Lieferung zu validieren,
die Mittel dazu ausgelegt sind, einem zweiten Kurier, der zum Weiterliefern der Waren von einem ersten Kurier ausgewählt ist, Folgendes bereitzustellen: ein erstes kryptographisches Token zum Belegen, dass der zweite Kurier für die Lieferung ausgewählt wurde, ein zweites kryptographisches Token, das in Reaktion auf das Empfangen der Waren vom ersten Kurier dem ersten Kurier bereitzustellen ist, und ein drittes kryptographisches Token, das nach Empfang der Waren vom Empfänger oder einem dritten Kurier zum Belegen einer Lieferung an den Empfänger oder den dritten Kurier für den intelligenten Vertrag für die Warenlieferung erhalten wird, und
wobei der intelligente Vertrag ein Vertrag mit mehreren Unterschriften ist, der Unterschriften mindestens von den ausgewählten Kurieren umfasst, und die Mittel dazu ausgelegt sind, den intelligenten Vertrag durch eine Blockkettentransaktion einem blockkettenbasierten Netzwerk zur Validierung bereitzustellen, und die Tokens kurierspezifische geheime Schlüssel sind, wobei jeder kurierspezifische geheime Schlüssel durch einen öffentlichen Schlüssel eines jeweiligen Kuriers erzeugt wird.

7. Vorrichtung nach Anspruch 6, wobei die Mittel ferner dazu ausgelegt sind, den zweiten Kurier mit Folgendem auszustatten:
- der Lieferkennung für die Lieferung von Waren,
- einem ersten geheimen Schlüssel zum Belegen, dass der zweite Kurier zum Abwickeln der Lieferung ausgewählt wurde,
- einem zweiten geheimen Schlüssel, der in Reaktion auf das Empfangen der Waren vom ersten Kurier dem ersten Kurier bereitzustellen ist,
- einem dritten geheimen Schlüssel, der nach Empfang der Waren vom Empfänger oder einem dritten Kurier zum Belegen einer Lieferung an den Empfänger oder den dritten Kurier für den intelligenten Vertrag für die Warenlieferung erhalten wird, und
- einer Kennung des dritten Kuriers oder des Empfängers.

8. Vorrichtung nach Anspruch 7, wobei der intelligente Vertrag für die Warenlieferung dazu ausgelegt ist, in Reaktion auf das Empfangen des zweiten geheimen Schlüssels, eines vierten geheimen Schlüssels, der mit den Waren verknüpft ist, und eines fünften geheimen Schlüssels, der dem ersten Kurier zum Belegen, dass der erste Kurier zum Abwickeln der Lieferung ausgewählt wurde, eine Lieferung der Waren vom ersten Kurier an den zweiten Kurier zu validieren.

9. Vorrichtung nach einem der vorhergehenden Ansprüche 6 bis 8, wobei der Weiterleiter für die Lieferung von Waren auf Basis einer Anzeige eines Standortbereichs des Absenders und einer Anzeige eines Standortbereichs des Empfängers ausgewählt (110) wird.

10. Vorrichtung nach einem der vorhergehenden Ansprüche 6 bis 9, wobei die Mittel dazu ausgelegt sind, den einen oder die mehreren Absenderkuriere und den einen oder die mehreren Empfängerkuriere aus verschiedenen Untersätzen von verfügbaren Kurieren auszuwählen (120).

11. Vorrichtung nach einem der vorhergehenden Ansprüche 6 bis 10, wobei die Vorrichtung ein intelligentes Vertragssystem umfasst, das dazu ausgelegt ist, den einen oder die mehreren Absenderkuriere und den einen oder die mehreren Empfängerkuriere auszuwählen (120).

12. Vorrichtung nach einem der vorhergehenden Ansprüche 6 bis 11, wobei der Weiterleiter ein aktiver Weiterleiter und dazu ausgelegt ist, mindestens eine Anonymisierungsfunktion für die Waren durchzuführen.

13. Vorrichtung nach Anspruch 12, wobei die Mittel ferner zu Folgendem ausgelegt sind:
Definieren einer ersten Liefersegmentkennung für die Lieferung von Waren vom Absender an den aktiven Weiterleiter und Bereitstellen der ersten Liefersegmentkennung für den einen oder die mehreren Absenderkuriere,
Definieren einer zweiten Liefersegmentkennung für die Lieferung von Waren vom Absender an den aktiven Weiterleiter und Bereitstellen der zweiten Liefersegmentkennung für den einen oder die mehreren Empfängerkuriere, und
Definieren der ersten Liefersegmentkennung und der zweiten Liefersegmentkennung und Bereitstellen derselben für den aktiven Weiterleiter.

14. Vorrichtung nach Anspruch 13, wobei der aktive Weiterleiter dazu ausgelegt ist, nach Empfangen der Waren die erste Kennung zu entfernen und die Waren mit der zweiten Liefersegmentkennung zu verknüpfen, bevor das Senden der Waren für den einen oder die mehreren Empfängerkuriere veranlasst wird.

15. Computerprogramm, das einen Satz von computerlesbaren Anweisungen umfasst, die, wenn sie von mindestens einem Prozessor (702) ausgeführt werden, eine Vorrichtung veranlassen, das Verfahren nach einem der vorhergehenden Ansprüche 1 bis 5 durchzuführen.

## Revendications

1. Procédé pour un appareil destiné à établir l'anonymat pour une livraison de marchandises, comprenant :
- la définition (100) d'un identifiant de livraison pour la livraison de marchandises d'un expéditeur à un destinataire,
- la définition (110) d'un relais pour la livraison de marchandises,
- la sélection (120) d'un ou plusieurs coursiers expéditeurs pour envoyer les marchandises au relais et/ou la sélection d'un ou plusieurs coursiers destinataires pour recevoir les marchandises du relais,
- la génération (130), pour la livraison de marchandises, d'un contrat intelligent comprenant des jetons cryptographiques pour confirmer la livraison, dans lequel le contrat intelligent est un protocole de transaction informatisé,
- la fourniture (140) du contrat intelligent pour la livraison de marchandises au réseau distribué, et
- la fourniture (150) des jetons cryptographiques, de l'identifiant de livraison et d'un identifiant du relais aux un ou plusieurs coursiers sélectionnés, dans lequel
le contrat intelligent pour la livraison de marchandises est configuré pour recevoir (306 ; 307) des jetons cryptographiques des coursiers et valider la livraison des marchandises entre l'expéditeur et le relais par les un ou plusieurs coursiers expéditeurs, et entre le relais et le destinataire par les un ou plusieurs coursiers destinataires, sur la base des jetons cryptographiques reçus et d'informations cryptographiques spécifiques à l'expéditeur et au destinataire stockées dans le contrat intelligent dans le cadre d'un accord sur la livraison,
la fourniture (150) des jetons cryptographiques comprend la fourniture, pour un deuxième coursier sélectionné pour livrer les marchandises en plus d'un premier coursier : un premier jeton cryptographique pour prouver que le deuxième coursier a été sélectionné pour la livraison, un deuxième jeton cryptographique à fournir au premier coursier en réponse à la réception des marchandises du premier coursier, et un troisième jeton cryptographique obtenu à la réception des marchandises du destinataire ou d'un troisième coursier pour prouver la livraison au destinataire ou au troisième coursier pour le contrat intelligent pour la livraison de marchandises, et
dans lequel le contrat intelligent est un contrat multisignature comprenant au moins les signatures des coursiers sélectionnés, et fourni par une transaction de chaîne de blocs à un réseau basé sur la chaîne de blocs pour validation, et les jetons sont des clés secrètes spécifiques aux coursiers, chaque clé secrète spécifique aux coursiers étant générée par une clé publique d'un coursier respectif.

2. Procédé de la revendication 1, dans lequel le deuxième coursier est pourvu :
- de l'identifiant de livraison pour la livraison de marchandises,
- d'une première clé secrète pour prouver que le deuxième coursier a été sélectionné pour effectuer la livraison,
- d'une deuxième clé secrète à fournir au premier coursier en réponse à la réception des marchandises du premier coursier,
- d'une troisième clé secrète obtenue à la réception des marchandises du destinataire ou d'un troisième coursier pour prouver la livraison au destinataire ou au troisième coursier pour le contrat intelligent pour la livraison de marchandises, et
- d'un identifiant du troisième coursier ou du destinataire.

3. Procédé de la revendication 2, dans lequel le contrat intelligent est configuré pour valider une livraison des marchandises du premier coursier au deuxième coursier en réponse à la réception de la deuxième clé secrète, d'une quatrième clé secrète associée aux marchandises, et d'une cinquième clé secrète fournie au premier coursier pour prouver que le premier coursier a été sélectionné pour effectuer la livraison.

4. Procédé de l'une des revendications précédentes, dans lequel le relais est sélectionné (110) pour la livraison de marchandises sur la base d'une indication d'une zone d'emplacement de l'expéditeur et d'une indication d'une zone d'emplacement du destinataire.

5. Procédé de l'une des revendications précédentes, dans lequel un contrat intelligent de système est configuré pour sélectionner les un ou plusieurs coursiers expéditeurs et les un ou plusieurs coursiers destinataires, et/ou le relais est un relais actif et est configuré pour réaliser au moins une fonction d'anonymisation pour les marchandises.

6. Appareil comprenant des moyens pour réaliser :
- la définition (100) d'un identifiant de livraison pour la livraison de marchandises d'un expéditeur à un destinataire,
- la définition (110) d'un relais pour la livraison de marchandises,
- la sélection (120) d'un ou plusieurs coursiers expéditeurs pour envoyer les marchandises au relais et/ou la sélection d'un ou plusieurs coursiers destinataires pour recevoir les marchandises du relais,
- la génération (130), pour la livraison de marchandises, d'un contrat intelligent comprenant des jetons cryptographiques pour confirmer la livraison, dans lequel le contrat intelligent est un protocole de transaction informatisé et est configuré pour valider la livraison des marchandises sur la base de jetons des coursiers,
- la fourniture (140) du contrat intelligent pour la livraison de marchandises au réseau distribué, et
- la fourniture (150) des jetons cryptographiques, de l'identifiant de livraison et d'un identifiant du relais aux un ou plusieurs coursiers sélectionnés, dans lequel
le contrat intelligent pour la livraison de marchandises est configuré pour recevoir (306 ; 307) des jetons cryptographiques des coursiers et valider la livraison des marchandises entre l'expéditeur et le relais par les un ou plusieurs coursiers expéditeurs, et entre le relais et le destinataire par les un ou plusieurs coursiers destinataires, sur la base des jetons cryptographiques reçus et d'informations cryptographiques spécifiques à l'expéditeur et au destinataire stockées dans le contrat intelligent dans le cadre d'un accord sur la livraison,
les moyens sont configurés pour fournir, pour un deuxième coursier sélectionné pour livrer les marchandises en plus d'un premier coursier : un premier jeton cryptographique pour prouver que le deuxième coursier a été sélectionné pour la livraison, un deuxième jeton cryptographique à fournir au premier coursier en réponse à la réception des marchandises du premier coursier, et un troisième jeton cryptographique obtenu à la réception des marchandises du destinataire ou d'un troisième coursier pour prouver la livraison au destinataire ou au troisième coursier pour le contrat intelligent pour la livraison de marchandises, et
dans lequel le contrat intelligent est un contrat multisignature comprenant au moins les signatures des coursiers sélectionnés, et les moyens sont configurés pour fournir le contrat intelligent pour validation à un réseau basé sur la chaîne de blocs par une transaction de chaîne de blocs, et les jetons sont des clés secrètes spécifiques aux coursiers, chaque clé secrète spécifique aux coursiers étant générée par une clé publique d'un coursier respectif.

7. Appareil de la revendication 6, dans lequel les moyens sont en outre configurés pour fournir au deuxième coursier :
- l'identifiant de livraison pour la livraison de marchandises,
- une première clé secrète pour prouver que le deuxième coursier a été sélectionné pour effectuer la livraison,
- une deuxième clé secrète à fournir au premier coursier en réponse à la réception des marchandises du premier coursier,
- une troisième clé secrète obtenue à la réception des marchandises du destinataire ou d'un troisième coursier pour prouver la livraison au destinataire ou au troisième coursier pour le contrat intelligent pour la livraison de marchandises, et
- un identifiant du troisième coursier ou du destinataire.

8. Appareil de la revendication 7, dans lequel le contrat intelligent pour la livraison de marchandises est configuré pour valider une livraison des marchandises du premier coursier au deuxième coursier en réponse à la réception de la deuxième clé secrète, d'une quatrième clé secrète associée aux marchandises, et d'une cinquième clé secrète fournie au premier coursier pour prouver que le premier coursier a été sélectionné pour effectuer la livraison.

9. Appareil de l'une des revendications précédentes 6 à 8, dans lequel le relais est sélectionné (110) pour la livraison de marchandises sur la base d'une indication d'une zone d'emplacement de l'expéditeur et d'une indication d'une zone d'emplacement du destinataire.

10. Appareil de l'une des revendications précédentes 6 à 9, dans lequel les moyens sont configurés pour sélectionner (120) les un ou plusieurs coursiers expéditeurs et les un ou plusieurs coursiers destinataires dans différents sous-ensembles de coursiers disponibles.

11. Appareil de l'une des revendications précédentes 6 à 10, dans lequel l'appareil comprend un contrat intelligent de système configuré pour sélectionner (120) les un ou plusieurs coursiers expéditeurs et les un ou plusieurs coursiers destinataires.

12. Appareil de l'une des revendications précédentes 6 à 11, dans lequel le relais est un relais actif et est configuré pour réaliser au moins une fonction d'anonymisation pour les marchandises.

13. Appareil de la revendication 12, dans lequel les moyens sont en outre configurés pour réaliser :
la définition d'un premier identifiant de segment de livraison pour la livraison de marchandises de l'expéditeur au relais actif, et la fourniture du premier identifiant de segment de livraison aux un ou plusieurs coursiers expéditeurs,
la définition d'un deuxième identifiant de segment de livraison pour la livraison de marchandises de l'expéditeur au relais actif, et la fourniture du deuxième identifiant de segment de livraison aux un ou plusieurs coursiers destinataires, et
la définition et la fourniture du premier identifiant de segment de livraison et du deuxième identifiant de segment de livraison au relais actif.

14. Appareil de la revendication 13, dans lequel le relais actif est configuré pour supprimer le premier identifiant à la réception des marchandises, et associer les marchandises au deuxième identifiant de segment de livraison avant de provoquer l'envoi des marchandises pour les un ou plusieurs coursiers destinataires.

15. Programme informatique comprenant un ensemble d'instructions lisibles par ordinateur qui, lorsqu'elles sont exécutées par au moins un processeur (702), amènent un appareil à réaliser le procédé de l'une des revendications précédentes 1 à 5.
